(19) Europäisches Patentamt
European Patent Office
Office européen des brevets

(11) Publication number: **0 233 494 A2**

# (12) EUROPEAN PATENT APPLICATION

(21) Application number: 87100743.1

(22) Date of filing: 20.01.87

(51) Int. Cl.⁴: C08J 7/02 , C08L 81/02

(30) Priority: 23.01.86 JP 12889/86
12.12.86 JP 296454/86

(43) Date of publication of application:
26.08.87 Bulletin 87/35

(84) Designated Contracting States:
DE FR GB

(71) Applicant: KUREHA KAGAKU KOGYO KABUSHIKI KAISHA
9-11 Horidome-cho 1-chome Nihonbashi
Chuo-ku
Tokyo(JP)

(72) Inventor: Kobayashi, Akio
3-39-3, Eguri Nishiki-Machi
Iwaki-Shi Fukushima-Ken(JP)
Inventor: Shiiki, Zenya
28-1, Ochidai Nishiki-Machi
Iwaki-Shi Fukushima-Ken(JP)

(74) Representative: Dr. Elisabeth Jung Dr. Jürgen Schirdewahn Dipl.-Ing. Claus Gernhardt
P.O. Box 40 14 68 Clemensstrasse 30
D-8000 München 40(DE)

## (54) Method for producing high-crystallinity polyarylene thioether formed products.

(57) A method for producing a formed product such as a sheet or film of a polyarylenethioether having increased crystallinity is provided. The method comprises contacting a molded product of a resin containing an effective amount of a polyarylenethioether including not less than 50 molar % of a repeating unit $-(Ar-S)-$ (wherein Ar is an arylene group) with liquid or vapor of an organic substance having an SP value of 8 to 12 at a temperature of not lower than the solidification point of the organic substance and not higher than the melting temperature of the resin for a time sufficient to obtain a desired increase in crystallinity. Moreover, the total time required for obtaining the same degree of crystallinity can be shortened by treating the formed product with the organic substance and then subjecting the formed product thus treated to heat treatment in the substantial absence of the organic substance. According to this embodiment, the crystallinity can be markedly enhanced in the same treating period of time.

EP 0 233 494 A2

# METHOD FOR PRODUCING HIGH-CRYSTALLINITY POLYARYLENE THIOETHER FORMED PRODUCTS

## BACKGROUND OF THE INVENTION

### Field of the Art

This invention relates to a method for producing a formed articles of polyarylenethioether which has increased crystallinity.

More specifically, this invention relates to an improvement in increasing the crystallinity of a polyarylenethioether formed article.

### Description of the Prior Art

Polyarylenethioethers have excellent properties such as heat resistance, chemical resistance and the like, and can be processed into molded articles as well as other various formed products such as films, sheets, fibers, pipes, bottles, etc. (hereinafter generally referred to as formed articles).

It has been necessary to subject such formed articles to treatment for increasing the crystallinity thereof after melt processing in order to provide them with high heat resistance and high mechanical strength which are inherent to polyarylenethioethers.

This is because, use of polyarylenethioethers of low crystallinity often results in markedly impairing their aimed properties such as heat resistance, chemical resistance and the like. Moreover, use of such polyarylenethioether often brings about problems in that the inherent properties of the polyarylenethioether cannot be sufficiently exhibited; namely, a formed article having an adequate specific gravity is not obtained therefrom and the lustre on the surface of the article is deteriorated.

In order to increase the crystallinity, usually a polyarylenethioether in a mold was heated or a molded article thereof was heated under stretching, restricted deformation or in a free state, to a temperature not lower than the second transition temperature of the resin used (usually in the range of 70 to 90°C) and lower than the melting point of the resin (namely, annealing or heat-setting treatment).

Such heating treatment, however, had defects in that crystallization at a lower temperature requires a longer period of time, while a lower temperature is desired for formed articles which are readily heat-deformable or which are difficult to be heated.

## SUMMARY OF THE INVENTION

Hitherto, it has been believed that crystallization of polyarylenethioether resins scarcely proceeds at a temperature lower than the second transition temperature thereof (usually from 70°C to 90°C), because crystallization of a resin occurs through the arrangement of the resin molecules due to their thermal movement. Namely, it has been considered that the crystallinity of a polyarylenethioether resin would not be substantially increased unless the resin is heated to at least 70°C or higher.

We have conducted research to find a method for increasing the crystallinity of the resin without heating it to the second transition temperature thereof or higher. As a result, we have surprisingly found that the crystallinity of a formed article of the polyarylenethioether can be increased even at a temperature as low as room temperature by contactig the article with a certain type of an organic liquid or vapor.

In addition, it has also been found that, although the treatment with such solvent may require a relatively long time, desired crystallinity can be obtained by carrying out heating procedure to increase the crystallinity following the treatment with the solvent for a shorter period of time. When a thin polyarylenethioether (hereinafter, sometimes referred to as PATE) formed article such as sheet is subjected directly to heating to provide it with a desired crystallinity, the sheet deforms or waves significantly unless means to prevent such deformation is adopted during the heating. However, it has unexpectedly found that such deformation is not observed in such sheet which has been subjected to the treatment with the solvent prior to the heating procedure.

The present invention is accomplished based on such findings. Namely, the method for producing a formed article of a polyarylenethioether having increased crystallinity according to the present invention comprises contacting a formed article of a resin comprising an effective amount of a polyarylenethioether having not less than 50 molar % of a repeating unit $-(\text{Ar-S})-$ wherein Ar denotes an arylene group with liquid or vapor of an organic substance which has a solubility parameter of 8 to l2 at a temperature not lower than the solidification point of the organic substance and not higher than the melting point of the resin.

Heat-deformable formed articles or formed articles which are difficult to be heated have been hitherto used without increasing the crystallinity at the sacrifice of the properties thereof to some degree. The method for producing a formed article of a polyarylenethioether having an increased crystallinity according to the present invention enables increasing the crystallinity thereof at room temperature or at a temperature not higher than the second transition temperature of the resin. Thus, the resulting article has excellent properties such as heat resistance and chemical resistance and does not make substantial difference from those of the resin articles which have crystallinity increased by heating to the second transition temperature thereof or higher. Moreover, in the case where crystallization is conducted at a temperature not lower than the second transition temperature of the resin by applying the present invention, the crystallization time is shortened. Thus, energy required for the heating is saved and the equipment therefor is expected to be smaller.

It is unexpectable, in consideration of the fact that crystallization is caused by the thermal movement of resin molecules, that crystallization can be conducted at a temperature lower than that necessary to the thermal movement of resin molecules, i.e. a temperature approximately lower than the second transition temperature of the resin.

## DETAILED DESCRIPTION OF THE INVENTION

### Resin Materials

The resin material intended in the present invention comprises an effective amount of polyarylenethioether (the definition of the term "comprises an effective amount" is given below).

### Polyarylenethioether

The polyarylenethioether, which will sometimes be referred to as PATE, used in the present invention is a homopolymer or a copolymer having a repeating unit of the formula: $-(\text{Ar-S})-$ as a main structural unit. In the formula, Ar denotes an arylene group. A small amount of branched bonds or crosslinks represented by the formula:

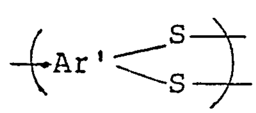

and the like may be contained in the resin as long as the resin contains the above repeating unit as a main structural unit.

The Ar is illustrated by:

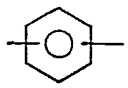, 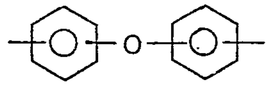, 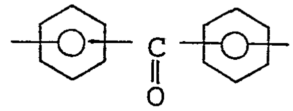,

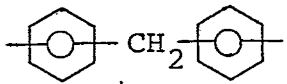, 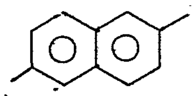, 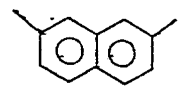,

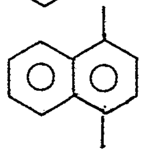, 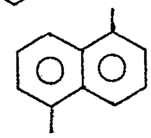, 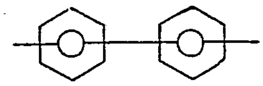 and 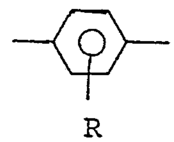

(wherein, R denotes an alkyl or an alkoxy group, particularly containing approximately I to 4 carbon atoms). The Ar' is illustrated by

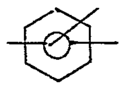 and 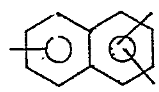.

Among the

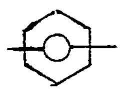, 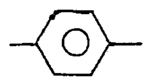

is preferred.

The polyarylenethioethers particularly preferred in the invention include a poly-p-phenylenethioehter and a phenylenethioether copolymer which contains not less than 50 molar % of p-phenylenethioether unit

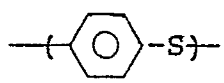

as a main structural unit of the polymer.

As the copolymer, block copolymers are particularly preferred in view of heat resistance and processability. The copolymerizable unit in the copolymer includes, for example,

m-phenylenethioether unit (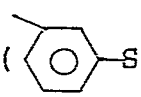),

diphenylketone thioether unit 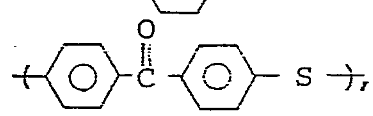,

diphenylether thioether unit 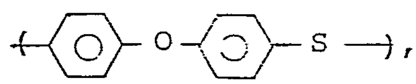,

biphenylthioether unit (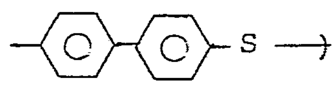, 2,6-

naphthalenethioether unit (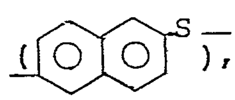), trifunctional unit

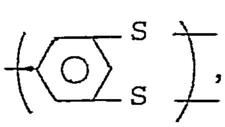,

and the like. Incidentally, it is desirable that the trifunctional unit is contained in an amount not more than I molar %.

As such polyarylenethioether, can be used those synthesized according to conventional methods. Such methods include, for example, the method disclosed in U.S. Patent No. 3,354,I29. This method in its preferable embodiment comprises reacting p-dichlorobenzene with sodium sulfide in N-methylpyrrolidone - (NMP) to produce a polyphenylenethioether. It is also suitable to use such method as described in Japanese Patent Publication No. I2240/I977 wherein a reaction of dichlorobenzene with sodium sulfide in NMP is carried out in the presence of an alkali metal salt of an organic acid, such as lithium acetate or sodium acetate, to obtain a polyphenylenethioether having a higher molecular weight. Other methods to be used to provide a higher molecular weight polyphenylenethioether include, for example, a method wherein an inorganic salt such as lithium carbonate or calcium hydroxide is allowed to coexist in the reaction system during a polymerization reaction in NMP, as well as a method wherein an amount of coexisting $H_2O$ and a polymerization temperature are controlled (Japanese Patent Application No. I26725/84). It is also possible to use the polymer which is obtained by heating a powdery polymer produced to a temperature not higher than the melting point thereof in the presence of oxygen (preferably in air) to increase the melt viscosity thereof.

As the phenylenethioether block copolymer, preferably used is a block copolymer of p-phenylenethioether and m-phenylenethioether.

This block copolymer can be prepared by any method as long as the method provides a copolymer consisting essentially of a block of a repeating unit

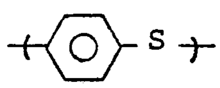

and a block of a repeating unit

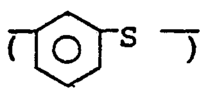

through formation and linking of these blocks. For example, the method disclosed in Japanese Patent Application No. I34633/I984 specification can be used. Specifically, methods for producing such block copolymers include a method wherein one of the blocks is at first formed and then the other block is formed at the terminus of the former block, as well as a method wherein both blocks are formed separately and then bonded to each other. Thus, the method for preparing the block copolymers to be used in the present invention is not essentially different from conventional methods for producing phenylenethioether polymers except that consideration is taken for formation and bonding of these blocks as well as for the type of the phenylenesulfide repeating unit, and that some modification is made, as necessary. Namely, the method for preparing the block copolymer to be used in the present invention comprises heating an alkali metal sulfide with a dihaloaromatic compound (consisting principally of p-and m-dihalobenzene) in an aprotic polar organic solvent (e.g. NMP) to condense them with each other, namely with elimination of an alkali metal halide.

Polyarylenethioethers which are homopolymers or copolymers such as block copolymers desirably have a melt viscosity in the range of 50 to I00,000 poise measured under the conditions of 3I0°C/shear rate of 200 $sec^{-1}$.

Polyarylenethioether resin

The resin which constitutes the formed articles of the present invention comprises an effective amount of the polyarylenethioether. The term "comprises an effective amount" means that the resin comprises a polyarylenethioether in an amount not less than that necessary to make the treatment according to the present invention significantly realized, preferably more than 50%, more preferably more than 70%, most preferably more than 90% by weight of the resin.

Thus, the polyarylenethioether is preferably used as it is as the sole component of the resin. It is, however, possible to add thereto inorganic fillers which do not react with the organic substance described below nor are miscible therewith such as silica powder, alumina powder, silica alumina powder, mica, kaoline, calcium carbonate powder, calcium silicate powder, talc, carbon black, wollastonite, potassium titanate whisker and the like; fibrous fillers such as glass fiber, carbon fiber, etc.; nucleating agent; crystallization regulator; pigments; stabilizers; lubricants; mold releasers; and the like.

Moreover, it is possible to blend the polyarylenethioether with other polyarylenethioethers and/or other thermoplastic resins which do not react with nor are miscible with the organic substance mentioned below as long as the resulting blend can be processed into formed articles without difficulty. In such resin blend, the polyarylenethioether should occupy a predominant amount as shown above.

Crystallization

Organic substance

The organic substances to be used for the production of a molded article of crystallized polyarylenethioether or of a composition thereof according to the invention preferably have an excellent affinity to the polyarylenethioether. Such organic substances are used in the form of liquid or vapor.

Generally, solubility parameter (SP) value is an effective measure for showing the affinity between an organic polymer and a solvent. The SP value is well known in the art, the details of which are described, for example, in Journal of Applied Polymer Science, vol. l9, page ll63 (l975). This literature is incorporated herein as reference.

The SP value of the polyarylenethioether has not been fully clarified. However, it is not preferable to use aliphatic hydrocarbons having a small SP value, or substances having too large SP value, or organic substances having a high hydrogen bonding capability such as water, alcohols, amines or the like.

Thus, the organic substances to be preferably used in the present invention have an SP value in the range of from 8 to l2, more preferably from 8.4 to ll [(cal/cm$^3$) $^{\frac{1}{2}}$. These substances have a weak hydrogen bonding capability.

The organic substances to be used for the method for producing a fomed article of the polyarylenethioether increased in crystallinity according to the present invention include, for example, carbon disulfide which is considered as an organic substance in the present invention, halohydrocarbons (chloroform, trichloroethylene, perchloroethylene, ethylene dichloride, bromobenzene, etc.), ethers - (tetrahydrofuran, etc.), thioethers (diphenylthioether, etc.), ketones (acetone, methylethylketone, cyclohexanone, etc.), amides (dimethylacetamide, dimethylformamide, N-methyl-2-pyrrolidone), esters (ethyl acetate, etc.), aromatic hydrocarbons (benzene, toluene, xylene, methylnaphthalene, decalin, tetralin, ethylbenzene, styrene), and the like. These organic substances can be used alone or as a mixture of two or more.

Among these organic substances, particularly preferred are $CS_2$, chloroform and trichloroethylene because they exhibit markedly large crystallization effects.

Production of formed articles with improved degree of crystallization

In order to produce a crystallized formed article according to the present invention, it is necessary to preliminarily subject a resin comprising an effective amount of the polyarylenethioether to forming operation wherein the resin undergoes melting. The wording "formed article" herein includes pellets.

By contacting the resulting melt-formed article with the liquid or vapor of an organic substance having a high affinity with the resin, the molecules of the organic substance are diffused into the formed article to increase the crystallinity of the resin. It is believed that the molecules of the low molecular weight organic substance which has diffused into the formed article serve as a kind of a roller arranged between the polymer molecules and, thus, accelerates the movement of the polymer molecules in the resin to form a state of the polymer molecules of improved crystallinity. Since the action as the roller is effective even at a temperature below the second transition temperature of the resin, it is considered that the diffusion of the molecules of the low molecular weight organic substance into the inside of the formed article of the polyarylenethioether determines the crystallization rate.

Therefore, one of the ways to promote such diffusion is to select such organic substance that has high affinity with the PATE and to increase the temperature to enhance the movement of the molecules.

The contact temperature of not lower than the solidification point of the organic molecule, at which the organic molecule can diffuse, can, as a rule, bring about crystallization of the resin. However, a higher temperature is advantageous because crystallization rate is higher. Incidentally, it is not adequate to employ a temperature higher than the melting point of the polyphenylenethioether resin because the crystal structure of the resin is broken at such temperature. Any temperature below the melting point of the resin can be adopted, but a temperature not higher than the second transition temperature of the resin is preferable.

Contact time necessary for crystallization varies depending upon the contact temperature; a lower temperature requires a longer time and a short period is sufficient at a high temperature. The contact time is usually in the range of approximately I second to I00 hours and preferably in the range of 3 seconds to 24 hours. A contact time shorter than I second results in insufficient crystallization, while that longer than I00 hours is not practical in view of economy. Film-or sheet-like articles require a shorter contact time and thicker articles require a longer time.

As mentioned above, the present invention can be carried out at a temperature lower than the melting point of the resin. Thus, by applying the method of the present invention to conventional heat setting treatment of threads or films at a high temperature not higher than the melting point thereof with using the low molecular organic substance, it is possible to largely decrease the temperature or the period of time necessary for the treatment.

The method of contacting the low molecular organic substance with the resin molded article preferably includes a method of soaking the formed article in the low molecular organic substance, a method of applying the low molecular organic substance onto the formed article, and a method of exposing the formed article to the vapor of the low molecular organic substance (vapor exposure). It is preferable for deformable formed articles such as molecularly oriented films, molecularly oriented sheets, molecularly oriented filaments, etc. to carry out the contact under stretching or restricted deformation. In the case where the molded article is film, sheet or thread, crystallization can be conducted simultaneously with stretching under stress.

Production of crystallized formed articles (bis)

In an embodiment (embodiment B) of the invention, a means to increase the crystallization through heat treatment is carried out after the treatment with the solvent mentioned above. It is usually desirable to conduct the heat treatment substantially in the absence of the solvent used in the preceding process.

In that case, the treatment with the solvent is preferably conducted until increase in crystallinity (by means of a density method) reaches 6% by weight or more. Namely, the PATE which is to be subjected to the treatment with the solvent usually has, irrespective of whether it is to be heat treated or not, a low crystallinity, specifically as low as I5% by weight or less of crystallinity measured by means of a density method wherein crystallinity is measured by the density method, the detail being given below, and preferably I0% by weight or less. In the embodiment B, such low crystallinity PATE is subjected to the solvent-treatment to increase the crystallinity by at least 6 points; namely, a PATE having an initial crystallinity of I0% by weight will have crystallinity of at least I6% by weight.

The heat treatment process sufficiently increases the crystallinity of a formed article and markedly enhances heat resistance, chemical resistance, mechanical properties, etc. thereof. If a melt-formed article is directly heat-treated under stress-free condition without subjecting to preliminary crystallization by means of the solvent, coarse crystals are produced to bring about wavy deformation when the article is a sheet or film.

In the formed aritcle which has been subjected to the preliminary crystallization with the solvent adequately according to the present invention, very fine spherulites are formed in a significant amount. When such a formed product is crystallized to a higher degree by means of heat treatment under stress-free conditon, it is supposed that these very fine crystals serve as nuclei and grow to form fine spherulites uniformly and, thus, wavy deformation of a sheet or film is scarcely produced to give a tough formed article of high crystallinity.

The temperature for the heat treatment is preferably in the range of from I40° to 300°C, and more preferably from I80° to 270°C. Heat treatment at a temperature below I40°C is not economical since crystallization rate is excessively low and, thus, a longer time is required. On the other hand, a temperature higher than 300°C is not preferable because the formed article may soften and deform. In order to provide PATE resin formed articles with high performance such as sufficient heat resistance, chemical resistance, moisture resistance, mechanical properties, etc., it is desirable to carry out the heat treatment until

crystallinity thereof reaches 20% by weight or more, more preferably 23% by weight or more, most preferably 26% by weight or more. The heat-treatment time required to achieve such crystallinity varies depending upon the crystallinity of a preliminarily crystallized article, temperature for the heat treatment and the like; however the lower the crystallinity of the preliminarily crystallized article is and the lower the treatment temperature is, the longer the treatment time is required. The treatment time is usually in the range of from I second to I00 hours, preferably from 3 seconds to 24 hours. Treatment for shorter than I second makes the control thereof difficult, whereas treatment for longer than I00 hours may cause thermal change of properties of the formed article. Thus, treatment time outside the range is not preferred.

Moreover, the heat treatment according to the present invention is characterized in that it can substantially maintain the shape of a formed article before the heat treatment because the treatment scarcely causes wavy deformation of the formed article, even if carried out without applying substantial stress such as a tension or compression. The heat treatment is particularly advantageous for treating formed articles which are difficult to subject to heat treatment under stress, such as sheets, plates, pipes, filaments, bolts, etc.

It is also one of the features of the invention that the formed articles produced through this heat treatment have a high toughness. It is presumed that such property results from very fine spherulites thus produced.

Crystallized PATE formed articles

The crystallized PATE formed articles produced according to the present invention can be used in various fields because of their characteristics such as heat resistance, chemical resistance, nonflammability, etc.

For example, they are preferably used for various molded products, sheets, films, pipes, fibers and the like.

The films or sheets are useful, for example in the electronic and electric field, as printing substrates, magnetic tapes (coating type, vapor-deposition type), insulating tapes, floppy disks, etc. Crystallized extrusion-molded articles (such as plates, pipes, profiles, etc.) are useful as a printing substrate, a protection pipe for integrated wiring in the electronic and electric field and as various corrosion-resistant, heat-resistant piping in the chemical industrial field. An electrical wire with an insulation covering of the crystallized PATE composition formed by covering the wire with a PATE composition followed by the crystallization treatment according to the present invention is useful as a heat-resistant and/or corrosion-resistant electrical wire. Crystallized injection-molded articles are useful as, for example, an IC sealing material, a printing substrate, a connector, parts of microwave devices, etc. in the electronic and electric field, and as a large-sized pump, large-sized valve, sealing material, lining material, etc.

The formed article according to the present invention generally has crystallinity not less than 5 or 6% by weight. When the treatment with the solvent is carried out in combination with the heat treatment - (embodiment B), crystallinity of PATE in a PATE resin is further increased to have as high as 20% by weight or more, and more preferably 30% by weight. If the crystallinity of the resin formed article is increased to 20% by weight or more, properties thereof such as heat resistance, chemical resistance, nonflammability, etc. become very satisfactory.

The highly crystallized PATE resin formed article according to the present invention (embodiment B) has a marked feature in that wavy deformation generated during the heat treatment process (high crystallization process) is very small. On the other hand, according to a conventional method wherein heat treatment is directly carried out without conducting preliminary crystallization treatment with a solvent, there is a fear that marked wavy deformation normally occurs due to non-uniform expansion and contraction to deviate from the original shape before the heat treatment unless a large stress (such as tension or compression) is applied during the heat treatmeht.

The highly crystallized PATE resin formed article according to the present invention (embodiment B) is characterized in that the surface unevenness due to wavy deformation is not more than 0.08 mm, preferably not more than 0.06 mm. On the other hand, nearly all of those according to a conventional method have surface unevenness of not less than I mm. The method of determining the unevenness will be given hereinbelow.

Another feature of the highly crystallized formed article according to the present invention (embodiment B) resides in that it has large elongation and strength, i.e. large toughness and such tendency is remarkable particularly at a high temperature of I00°C or higher. It is a further feature of the formed article according to the invention that fabrication such as compression or embossing and stretching or orientation at a high

temperature is facilitated because it has a large elongation. It is presumed that these properties come from fineness of the spherulites produced. Fabrication such as embossing and stretching or orientation is preferably carried out at a temperature from 130 to 270°C. At a temperature below 130°C, fabrication becomes difficult. On the other hand, it is not preferable to conduct such fabrication at a temperature higher than 270°C because there is a fear that crystallinity of the formed article is lowered.

A still further feature of the highly crystallized PATE resin molded article according to the present invention is that the transparency thereof is generally higher than that of conventional PATE articles. Stretched or orientated molded articles which have been highly crystallized according to the present invention exhibit such tendency markedly. It is also presumed that such result comes from the fineness of the spherulites produced therein.

## Experimentation

### Example 1

#### Synthesis of Polymers

(A) A 20 liter autoclave was charged with 11.0 kg of N-methyl-2-pyrrolidone (hereinafter, referred to as NMP) and 4.239 kg of crystalline $Na_2S$ pentahydrate containing 46.02% by weight of $Na_2S$ (manufactured by Nagao Soda K.K., Japan). The resulting mixture was heated gradually up to 200°C over about 2 hours with stirring in the nitrogen atmosphere to distil away water.

After cooling to 130°C, thereto were added 3.6 kg of p-dichlorobenzene (hereinafter, referred to as p-DCB) and 3.2 kg of NMP and the reaction mixture was heated to 220°C for 4 hours to effect polymerization. Then, 1.3 kg of water was added thereto, and the reaction system was heated to 265°C to effect polymerization for 4 hours. After cooling, the resulting polymer was sieved from oligomers, washed repeatedly with deionized water and then dried under reduced pressure at 100°C.

Polymer A thus obtained was p-phenylenesulfide straight polymer having a melt viscosity $\eta^*$ of 5,000 poise (310°C, shear rate 200 sec-1) and was highly crystalline having a crystalline melting point Tm of 282°C. The polymer A was melt-extruded at 330°C into pellets (A).

(B) A 20-liter autoclave was charged with 11.0 kg of NMP and 4.239 kg of crystalline $Na_2S$ pentahydrate containing 46.02% by weight of $Na_2S$. The resulting mixture was gradually heated up to 200°C over about 2 hours with stirring in the nitrogen atmosphere to distil away water. Thereto were added 3.6 kg of m-dichlorobenzene and 3.0 kg of NMP, and the reaction mixture was subjected to polymerization at 220°C for 8 hours to give a poly(m-phenylenesulfide)-containing slurry. The m-dichlorobenzene was polymerized almost completely. Polymerization degree of the resulting poly-m-phenylenesulfide was nearly 20 determined by measuring the amount of both terminal Cl's by means of fluorescent X-ray and then calculating.

Another 20-liter autoclave was charged with 9.0 kg of NMP and 3.604 kg of crystalline $Na_2S$ pentahydrate, and the resulting mixture was gradually heated to 200°C over about 2 hours with stirring in the nitrogen atmosphere to distil away water. Thereto were added 3.1 kg of p-dichlorobenzene, 3.0 kg of NMP and 2.8 kg of the poly(m-phenylenesulfide)-containing slurry above described. The reaction mixture was heated to 220°C and reacted for 9 hours. Then, 1.5 kg of water was added thereto, and the reaction mixture was heated to 265°C and reacted for 4 hours. Then, similarly to the procedure in (A), polymer (B) was recovered.

The polymer (B) thus obtained was a block copolymer consisting of unit

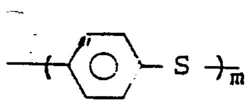 and unit 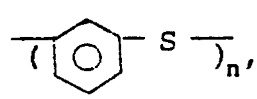,

and was of high crystallinity having a melt viscosity $\eta^*$ of 4,200 poise and a crystalline melting point of 272°C. Incidentally, the composition of this block copolymer measured by means of FT-IR was meta (m)-/para (p) = 15/85 (molar ratio). The polymer (B) was also melt-extruded at 320°C into pellets (B).

Forming of polymers

Each of the pellets (A) and (B) was melt-extruded at 3I0 to 320°C and then rapidly cooled to give T-die sheets (A) and (B), respectively, each having thickness of 0.2 mm.

Production of crystallized articles

Each of the strip-like samples of T-die sheets (A) and (B) was soaked in various low-molecular organic liquid and kept at 30°C for 24 hours.

Measurement of crystallinity

After the sample treated with a solvent was dried under reduced pressure until the weight thereof became constant, the density thereof was measured by using a gradient density tube and the crystallinity was calculated from the values, calculated based on the following values: density at the crystalline part = I.43, density at the non-crystalline part = I.32.

The results thus obtained are summarized in Table I below.

Table 1

| Polymer | Organic substance | SP value | Crystallinity (%) | Note |
|---|---|---|---|---|
| (A) | no | | 2 | Comp. Exam. |
| (B) | no | | 2 | " |
| (A) | n-hexane | 7.24 | 2 | " |
| (B) | n-hexane | " | 2 | " |
| (A) | methanol | 14.28 | 2 | " |
| (B) | ethanol | 12.92 | 2 | " |
| (A) | water | | 2 | " |
| (B) | water | | 2 | " |
| (A) | carbon disulfide | 9.97 | 30(25)* | Example |
| (B) | carbon disulfide | " | 32(27)* | " |
| (A) | chloroform | 9.21 | 37 | " |
| (B) | chloroform | " | 40 | " |
| (B) | trichloroethylene | 9.28 | 35 | " |
| (A) | perchloroethylene | - | 33 | " |
| (B) | ethylene dichloride | 9.76 | 30 | " |
| (B) | bromobenzene | - | 10 | " |
| (B) | tetrahydrofuran | 9.52 | 25 | " |
| (B) | diphenylthioether | - | 7 | " |
| (B) | acetone | 9.75 | 7 | " |
| (A) | methylethylketone | 9.27 | 7 | " |
| (B) | cyclohexanone | 9.87 | 7 | " |
| (B) | dimethylacetamide | 10.8 | 12 | " |
| (B) | dimethylformamide | 12.14 | 14 | " |
| (A) | NMP | - | 19 | " |
| (B) | ethyl acetate | 9.10 | 11 | " |
| (B) | benzene | 9.15 | 13 | " |
| (A) | toluene | 8.91 | 11 | " |

* data obtained by a vapor-exposition method which comprises exposing a strip-like sample of the T-die sheets (A) and (B) to carbon disulfide vapor at 30°C for 24 hours.

Forming of composition and production of crystallized article

To 90 parts by weight of polymer (B) was added 10 parts by weight of chopped glass fiber (CS3PE-471S manufactured by Nittobo K.K., Japan), and the resulting mixture was melt-extruded at 320°C into pellets. The pellets were hot-pressed at 310 to 320°C and then rapidly cooled to produce a sheet of 0.25 mm thick. The sheet was soaked in $CS_2$ at 25°C for 24 hours and dried under reduced pressure until the weight thereof became constant. Then the density of the sheet was measured by using a gradient density tube and the crystallinity was calculated from the value thus obtained with the density of the glass fiber being 2.54. As a result, the crystallinity thereof was 28(%).

Example II

Synthesis of Polymers

(C) A 2-$m^3$ autoclave was charged with 1030 kg of N-methyl-2-pyrrolidone (hereinafter, referred to as NMP) and 371.1 kg of crystalline $Na_2S$ pentahydrate containing 46.27% by weight of $Na_2S$ (manufactured by Nagao Soda K.K., Japan). The resulting mixture was heated gradually up to ca. 203°C with stirring in the nitrogen atmosphere to distil away water.

After cooling to 130°C, thereto were added 3 kg of water and 317.3 kg of p-dichlorobenzene (hereinafter, referred to as p-DCB) and 39 kg of NMP and the reaction mixture was heated to 220°C for 5 hours to effect polymerization. Then, 95 kg of water was added thereto, and the reaction system was heated to 256°C to effect polymerization for 2 hours and further heated to 245°C to effect polymerization for 6 hours. After cooling, the resulting polymer was sieved from oligomers, washed with acetone and washed repeatedly with deionized water and then dried under reduced pressure at 80°C.

Polymer C thus obtained was p-phenylenesulfide straight polymer having an inherent viscosity $\eta_{inh}$ of 0.44 dl/g (concentration of 0.4g/dl of l-chloronaphthalene solution, 206°C )

Preparation of pellets

In the same fashion as in the pellets (A) and (B), some of the polymer C was melt-extruded at about 325°C, rapidly cooled in a water bath, and cut into pellets (pellet Pl). Also, some of the polymer C was introduced into a Henschel mixer, blended with 2 PHR (parts per hundred of resin) of silica beads (F S44, 9.5 microns in diameter, supplied by Denkikagaku Kogyo K.K., Japan) and 1 PHR of potassium titanate whisker (HT-200, 1.1 microns in diameter, supplied by Titan Kogyo K.K., Japan), and pelletized in the same fashion as in the pellet Pl (Pellet P2).

Forming of the polymer

In the same fashion as in the pellets (A) and (B), the resulting pellets Pl and P2 were formed into T-die sheets Sl and S2 having thickness of 0.18 to 0.20 mm, respectively.

Preparation of high-crystalline products

The strip samples of the resulting T-die sheets Sl and S2 (10 mm × 100 mm) were soaked in a variety of solvents for pre-crystallization, wherein the temperature and time for the soaking were changed, respectively. Soon after the soaking, the sheets were put in methanol and washed, and dried overnight under reduced pressure at room temperature to obtain the samples of pre-crystallized molded products. The resulting pre-crystallized products were subjected to heat treatment in free states in a high-temperature oven for a predetermined time. Thus, high-crystalline molded products were obtained.

Determination of Properties

(1) The degrees of crystallization of the resulting samples (untreated products, pre-crystallized products, and high-crystalline products) were determined by means of the density method using a gradient density tube, in the same fashion as described above. The results are shown in Table 2.

(2) The sample of high-crystalline formed products was sandwiched between two glass plates, and the space distance of the two glass plates was measured. Also, the thickness of the sample was measured with a dial gauge. The surface unevenness due to wavy deformation of the samples was determined from the difference between the space distance and the thickness. The results are shown in Table 2.

(3) The thermal resistance of the high-crystalline products was evaluated with respect to resistance to molten solder. The sample was soaked in a solder bath of 250°C for 30 seconds, and the resulting deformation was observed. As a result, the samples were evaluated as "poor" when deformation was observed, and as "good" when no deformation was observed. The results are shown in Table 2. Incidentally, the high-crystalline molded products which had been deformed to a markedly wavy state were not tested, because they could not be evaluated by the thermal resistance to solder.

(4) The mechanical properties (elongation and fracture strength) of some high-crystalline molded products were determined at 25°, 100° and 150°C by means of a Tensilon tester (Toyo Baldwin K.K., Japan). The results are shown in Table 3.

The SP values of the solvents including diluents used in Example II are as follows.

| | |
|---|---|
| chloroform: | 9.2 |
| dioxane: | 9.7 |
| $CS_2$: | 10.0 |
| acetone: | 9.8 |
| THF: | 9.5 |
| pyridine: | 10.6 |
| toluene: | 8.9 |
| trichloroethylene: | 9.3 |
| nitrobenzene: | 10.7 |
| NMP: | ca. 10 (estimation) |
| sulfolane: | ca. 10.5 (estimation) |
| ethanol: | 12.9 |
| n-hexane: | 7.3 |
| water: | 23.5 |

Example III

High-crystalline sheets HC-2 and HC-6 were preheated to 120°C and compression-molded at 180°C by means of a matched die into tray-like molded articles (10 cm long × 6 cm wide × 1 cm deep). Satisfactory normal molded articles were obtained with the HC-6 sheets. From the conventional HC-2 sheets, however, such normal molded articles could not be obtained because of poor elongation with the arris portions of the articles being torn.

Table 2 (#1)

| | | Run No. | 1 | 2 | 3 | 4 |
|---|---|---|---|---|---|---|
| No treatment | | code | S 1 | S 1 | S 1 | S 1 |
| | | thickness (mm) | 0.18 | 0.18 | 0.18 | 0.18 |
| | | crystallinity (% by wt.) | 2 | 2 | 2 | 2 |
| Preliminary crystallization | Solvent treatment | solvent used | | | water | ethanol |
| | | composition (wt. ratio) | | | - | - |
| | | content of diluent used (% by wt.) | | | - | - |
| | | temperature (°C) | | | 60 | 60 |
| | | time (sec.) | | | 300 | 300 |
| | Product | code | | | PC-3 | PC-4 |
| | | increase in crystallinity (% by wt) | | | 0 | 0 |
| Further crystallization | Heat treatment | temperature (°C) | | 260 | 260 | 260 |
| | | time (min.) | | 10 | 10 | 10 |
| | Product | code | - | HC-2 | HC-3 | HC-4 |
| | | crystallinity (% by wt.) | - | 26 | 26 | 27 |
| | | surface unevenness (mm) | <0.03 | 1.30 | 1.22 | 1.26 |
| | | soldering resistance (250°C/30 sec.) | poor | - | - | - |
| Remarks | | | No treatment (Reference) | No preliminary crystallization (Reference) | Treatment with a diluent only (Reference) | Treatment with a diluent only (Reference) |

Table 2 (#2)

| | Run No. | 5 | 6 | 7 | 8 |
|---|---|---|---|---|---|
| | No treatment | | | | |
| | code | S 1 | S 1 | S 1 | S 1 |
| | thickness (mm) | 0.18 | 0.18 | 0.18 | 0.18 |
| | crystallinity (% by wt.) | 2 | 2 | 2 | 2 |
| Preliminary crystallization | Solvent treatment | | | | |
| | solvent used | n-hexane | dioxane | chloroform | chloroform |
| | composition (wt. ratio) | - | - | - | - |
| | content of diluent used (% by wt.) | - | - | - | - |
| | temperature (°C) | 60 | 60 | 25 | 60 |
| | time (sec.) | 300 | 300 | 250 | 60 |
| | Product | | | | |
| | code | PC-5 | PC-6 | PC-7 | PC-8 |
| | increase in crystallinity (% by wt) | 0 | 12 | 16 | 13 |
| Further crystallization | Heat treatment | | | | |
| | temperature (°C) | 260 | 260 | 260 | 260 |
| | time (min.) | 10 | 10 | 10 | 10 |
| | Product | | | | |
| | code | HC-5 | HC-6 | HC-7 | HC-8 |
| | crystallinity (% by wt.) | 26 | 28 | 28 | 27 |
| | surface unevenness (mm) | 1.24 | <0.03 | <0.03 | <0.03 |
| | soldering resistance (250°C/30 sec.) | - | good | good | good |
| | Remarks | Treatment with a diluent (Reference) | The invention | The invention | The invention |

Table 2 (#3)

| Run No. | | 9 | 10 | 11 | 12 |
|---|---|---|---|---|---|
| No treatment | | | | | |
| | code | S 1 | S 1 | S 1 | S 1 |
| | thickness (mm) | 0.18 | 0.18 | 0.18 | 0.18 |
| | crystallinity (% by wt.) | 2 | 2 | 2 | 2 |
| Preliminary crystallization | Solvent treatment | | | | |
| | solvent used | chloroform/pyridine | $CS_2$ | $CS_2$/acetone | THF/water |
| | composition (wt. ratio) | 95/5 | - | 60/40 | 98/2 |
| | content of diluent used (% by wt.) | - | - | - | 2 |
| | temperature (°C) | 60 | 25 | 25 | 25 |
| | time (sec.) | 15 | 30 | 300 | 300 |
| | Product | | | | |
| | code | PC-9 | PC-10 | PC-11 | PC-12 |
| | increase in crystallinity (% by wt) | 11 | 14 | 16 | 16 |
| Further crystallization | Heat treatment | | | | |
| | temperature (°C) | 260 | 260 | 260 | 260 |
| | time (min.) | 10 | 10 | 10 | 10 |
| | Product | | | | |
| | code | HC-9 | HC-10 | HC-11 | HC-12 |
| | crystallinity (% by wt.) | 28 | 26 | 28 | 27 |
| | surface unevenness (mm) | <0.03 | <0.03 | <0.03 | <0.03 |
| | soldering resistance (250°C/30 sec.) | good | good | good | good |
| Remarks | | The invention | The invention | The invention | The invention |

Table 2 (#4)

| | | 13 | 14 | 15 | 16 |
|---|---|---|---|---|---|
| Run No. | | 13 | 14 | 15 | 16 |
| No treatment | code | S 2 | S 1 | S 2 | S 1 |
| | thickness (mm) | 0.20 | 0.18 | 0.20 | 0.18 |
| | crystallinity (% by wt.) | 2 | 2 | 2 | 2 |
| Preliminary crystallization | Solvent treatment: solvent used | N-methylpyrrolidone/ sulfolane | toluene | trichloroethylene/ nitrobenzene | chloroform/ n-hexane |
| | composition (wt. ratio) | 95/5 | - | 95/5 | 90/10 |
| | content of diluent used (% by wt.) | - | - | - | 10 |
| | temperature (°C) | 60 | 60 | 60 | 25 |
| | time (sec.) | 300 | 300 | 120 | 300 |
| | Product: code | PC-13 | PC-14 | PC-15 | PC-16 |
| | increase in crystallinity (% by wt) | 15 | 13 | 17 | 12 |
| Further crystallization | Heat treatment: temperature (°C) | 260 | 260 | 260 | 260 |
| | time (min.) | 10 | 10 | 10 | 10 |
| | Product: code | HC-13 | HC-14 | HC-15 | HC-16 |
| | crystallinity (% by wt.) | 26 | 26 | 28 | 27 |
| | surface unevenness (mm) | <0.03 | <0.03 | <0.03 | <0.03 |
| | soldering resistance (250°C/30 sec.) | good | good | good | good |
| Remarks | | The invention | The invention | The invention | The invention |

Table 2 (#5)

| Run No. | | 17 | 18 | 19 | 20 |
|---|---|---|---|---|---|
| No treatment | | | | | |
| code | | S 1 | S 1 | S 1 | S 1 |
| thickness (mm) | | 0.18 | 0.18 | 0.18 | 0.18 |
| crystallinity (% by wt.) | | 2 | 2 | 2 | 2 |
| Preliminary crystallization | Solvent treatment | | | | |
| | solvent used | chloroform/ethanol | chloroform/ethanol | toluene | chloroform |
| | composition (wt. ratio) | 70/30 | 70/30 | - | - |
| | content of diluent used (% by wt.) | 30 | 30 | - | - |
| | temperature (°C) | 60 | 25 | 25 | 25 |
| | time (sec.) | 300 | 300 | 240 | 10 |
| | Product | | | | |
| | code | PC-17 | PC-18 | PC-19 | PC-20 |
| | increase in crystallinity (% by wt) | 13 | 5 | 4 | 5 |
| Further crystallization | Heat treatment | | | | |
| | temperature (°C) | 260 | 260 | 260 | 260 |
| | time (min.) | 10 | 10 | 10 | 10 |
| | Product | | | | |
| | code | HC-17 | HC-18 | HC-19 | HC-20 |
| | crystallinity (% by wt.) | 27 | 27 | 26 | 26 |
| | surface unevenness (mm) | <0.03 | 0.11 | 0.12 | 0.10 |
| | soldering resistance (250°C/30 sec.) | good | - | - | - |
| Remarks | | The invention | Preliminary crystallization insufficient (Reference) | Preliminary crystallization insufficient (Reference) | Preliminary crystallization insufficient (Reference) |

Table 3

| Sample code | HC-6 | HC-2 | S-1 |
|---|---|---|---|
| Elongation<br>25°C (%)<br>100°C (%)<br>150°C (%) | <br>29<br>150<br>>300 | <br>21<br>44<br>205 | <br>>300<br>>300<br>- |
| Breaking strength<br>25°C ($kg/mm^2$)<br>100°C ($kg/mm^2$)<br>150°C ($kg/mm^2$) | <br>9.8<br>5.8<br>5.2 | <br>9.7<br>5.5<br>3.3 | <br>5.6<br>3.8<br>- |
| Remarks | The invention | Reference | Reference |

**Claims**

1. A method for producing a formed product of a polyarylenethioether having increased crystallinity, which comprises contacting a formed product of a resin comprising an effective amount of a polyarylenethioether having at least 50 molar % of a repeating unit $-\!\!\left(\!-Ar\text{-}S-\!\right)\!\!-$ wherein Ar is an arylene group with liquid or vapor of an organic substance having a solubility parameter SP value of 8 to 12 at a temperature of not lower than the solidification point of the organic substance and not higher than the melting temperature of the resin for a time sufficient to obtain a desired increase in crystallinity of the polyarylenethioether.

2. The method according to claim 1, in which the polyarylenethioether is polyphenylenethioether.

3. The method according to claim 1 or 2, in which the contacting temperature of the formed product of a resin comprising an effective amount of polyarylenethioether and the organic substance is not lower than the solidification point of the organic substance and not higher than the second transition temperature of the resin.

4. The method according to any of the preceding claims, in which the organic substance is selected from the group consisting of carbon disulfide, a halohydrocarbon, an ether, a thioether, a ketone, an amide, an ester, an aromatic hydrocarbon, and mixtures thereof.

5. The method according to any of the preceding claims, in which the formed product is in the form of a film or sheet.

6. The method according to any of the preceding claims, in which the polyarylenethioether formed product to be treated with a solvent has crystallinity of not higher than 15% by weight, the formed product is treated with a solvent for crystallization until the crystallinity is increased by 6 points, and then the molded product thus treated is heated at a temperature of 140° to 300°C substantially in the absence of the solvent until the crystallinity is increased to at least 20% by weight.

7. The method according to claim 6, in which the polyarylenethioether is polyphenylenethioether.

8. The method according to claim 6 or 7, in which the contacting temperature of the molded product of a resin containing an effective amount of polyarylenethioether and the organic substance is not lower than the solidification point of the organic substance and not higher than the second transition temperature of the resin.

9. The method according to claim 6, 7 or 8, in which the organic substance is selected from the group consisting of carbon disulfide, a halohydrocarbon, an ether, a thioether, a ketone, an amide, an ester, an aromatic hydrocarbon, and mixtures thereof.

10. The method according to any of the preceding claims, in which the molded product is in the form of a film or sheet.